(19) Europäisches Patentamt
European Patent Office
Office européen des brevets

(11) **EP 1 688 043 B1**

(12) **EUROPEAN PATENT SPECIFICATION**

(45) Date of publication and mention
of the grant of the patent:
**02.05.2012 Bulletin 2012/18**

(51) Int Cl.:
***A23C 19/084*** (2006.01)

(21) Application number: **06075213.6**

(22) Date of filing: **01.02.2006**

(54) **Low-fat cheese**

Fettarmer Käse

Fromage allégé en graisses

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.02.2005 EP 05075252**

(43) Date of publication of application:
**09.08.2006 Bulletin 2006/32**

(73) Proprietor: **Friesland Brands B.V.**
**3818 LE Amersfoort (NL)**

(72) Inventors:
• **Schokker, Erik Peter**
**6721 BJ Bennekom (NL)**

• **Nieuwenhuijse, Johannes Andries**
**7207 NA Zutphen (NL)**
• **van Arem, Everhardus Jacobus Franciscus**
**8802 CR Franeker (NL)**
• **Jongsma, Tjeerd**
**6721 AA Bennekom (NL)**

(74) Representative: **Jansen, Cornelis Marinus et al**
**Vereenigde**
**Johan de Wittlaan 7**
**2517 JR Den Haag (NL)**

(56) References cited:
**WO-A-92/06598      WO-A-95/00032**
**US-A- 5 080 913      US-A- 5 709 900**

## Description

The invention relates to a cheese, in particular a cheese with a relatively low fat content.

Traditionally, cheese making is a process wherein milk ingredients are concentrated in order to preserve the ingredients for long periods of time. There are many types of cheese, each having its own specific production process. Some basic steps in cheese making involve: (a) coagulation of caseins by proteolytic actions of rennet type enzymes, inducing the milk to form a gel; (b) cutting the gel and removing a large part of the water (containing small components such as salts, sugars and whey proteins) from the gel, thereby concentrating the caseins and the fat; (c) addition of salt; and (d) ripening.

Many traditional cheeses have fat contents of about 20-30 wt. % (based upon the total weight of the final cheeses). For example a Gouda cheese has a fat content of about 30 wt. % (total weight), which corresponds to about 50 wt. % based upon the dry matter (48+ cheese). Because of an increased awareness of potential health hazards due to the intake of high amounts of fats, it is desired to provide cheese with a reduced fat content.

However, a general problem in low-fat cheeses is the occurrence of detrimental effects, related to the reduction of fat. Fat plays an important role in cheese and in the cheese texture. It contributes to the lubrication and creamy mouth feel. Further, it occupies space in the protein matrix thereby preventing the formation of a dense matrix which would result in a hard and/or gummy cheese. A high fat content generally has a positive effect on the fracture properties of the cheese. Reduction of fat in the cheese leads to textural defects, such as increased firmness, rubberiness, elasticity, hardness, dryness and graininess.

Several strategies have been proposed to improve the texture of low fat variants of traditional cheeses. Three main approaches are (i) modification of the processing technique, (ii) use of additives such as stabilisers and fat replacers, and (iii) use of special starter and adjunct cultures and enzymes.

Generally the processing techniques aim to increase the moisture/protein ratio, to lower the calcium/casein ratio and to decrease the extent of para-casein aggregation. Further it has been proposed to improve the quality by adjustment of the pH during setting and whey drainage, adjustment of the firmness at cutting, and homogenisation or size fractionation of fat globules.

Fat replacers are often used in low fat cheese in order to replace the voids left by fat in terms of its sensory and functional characteristics. Examples thereof are milk/egg-protein based products, restructured fat, gums, cellulose gels, carrageenan, gelatin and starch-based products.

Special starter- and adjunct cultures generally aim to increase the water content of the cheese, e.g. by exopolysaccharide or capsular polysaccharide producing strains.

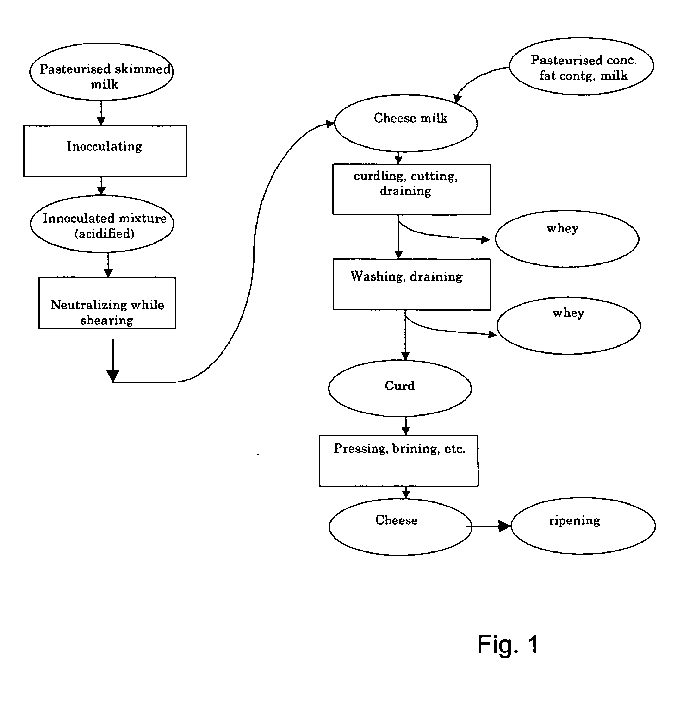

WO 95/00032 describes a cheese product essentially free of additives other than usual cheese ingredients wherein the fat content is reduced by enclosing therein discrete agglomerates of acid casein. In order to simulate the texture and mouth feel of a full fat cheese as much as possible, it is proposed to select and use the agglomerates such that their average particle size is 1-100 $\mu$m. Besides the acid casein being present as discrete agglomerates, fat globules are also present as discrete domains, which domains are homogeneously distributed throughout the cheese, as is shown in Figure 1 of WO 95/00032.

Despite all efforts to improve the texture of low fat-cheese, a desire exists in the art to provide further ways of altering and possibly improving the texture of low-fat cheese, in order to imitate the texture of full-fat cheese, to emulate the texture of full-fat cheese better and/or to provide a full-fat cheese with a distinct texture.

It is an object of the invention to provide a new cheese with reduced fat content respectively a new cheese with a normal fat-content, having a distinct structure compared to a similar known cheese.

It is in particular an object of the invention to provide a low-fat cheese having a satisfactory texture, a favourable creamy impression, a good lubrication behaviour and/or a good release behaviour of fat-soluble flavours.

It has now been found that it is possible to provide a cheese having properties that are generally associated with a cheese having a higher fat content. Such a cheese may be provided by preparing the cheese in a specific way, in particular by preparing the cheese such that the fat is concentrated in a specific part of the cheese, resulting in a cheese with an inhomogeneous fat distribution.

Accordingly, the present invention relates to a method comprising:

- subjecting a liquid comprising a protein (such as milk), said liquid having a relatively low fat content, to at least partial curdling, thereby forming low-fat particles;
- mixing the low-fat particles with a milk having a relatively high fat content; and
- forming the cheese from the mixture.

More in particular, the present invention relates to a method for preparing a cheese from a cheese milk (i.e. a milk which contains fat), comprising

- curdling, in particular fermenting, a liquid comprising a milk protein - in particular skimmed milk or another type of milk - having a relatively low fat content compared to the cheese milk;
- forming low-fat particles comprising (fermented) milk protein from the curdled (fermented) liquid;
- mixing the low-fat particles, with the cheese milk; and
- forming the cheese from the mixture comprising the low-fat particles and the cheese milk.

The fat content of the liquid (milk) used for preparing the low fat particles, such as particles comprising casein, may be 0 % or more. The fat content is less than the fat content of the cheese milk, i.e. the fat content of the liquid from which the particles are made is relatively low (compared to the fat content of the cheese milk). Preferably, the fat content of the liquid (milk) used for preparing the low fat particles is less than about 2 wt. % (total weight), more preferably less than about 1 wt. % (total weight), in particular when preparing cheese with a very low fat content such as 20+ cheese. Particularly good results have been realised in a process wherein the fat content in the milk for preparing low fat (casein) particles is about 0.5 wt. % (total weight) or less.

When the terms "about", "essentially consisting of" and the like are used herein, this is at least meant to include a deviation of up to 10 %, in particular of up to 5 %, more in particular of up to 2 %.

The term "essentially free" is used to describe that no traceable amount (as detectable by conventional means at the priority date) or only a minor amount of a particular component is present in the composition. In particular this term is used to indicate an amount of less than 0.5 wt. %, more in particular an amount of less than 0.1 wt. % of the component(s) of which the composition is essentially free.

The abbreviation "d.m." relates to "in the dry matter".

The liquid used for making low fat particles and/or the cheese milk may be concentrated, in particular with respect to the protein content. This has been found to be beneficial to the efficiency of the process. In particular, it has been found that larger protein aggregates (low-fat particles) can be obtained by using concentrated milk, and particularly concentrated milk with a relatively low fat content. This is considered beneficial with respect to obtaining an inhomogeneous fat distribution in the cheese.

The concentration factor may be chosen in wide limits. In particular the milk may be concentrated by a factor of at least about 1.5 (compared to fresh milk), more in particular by a factor of at least about 2.0. For practical reasons, it is preferred that the concentration factor is about 3.0 or less.

The concentration process may be carried out in a way known in the art, such as by a membrane filtration concentration technique (microfiltration and/or ultrafiltration).

It is also possible to provide a concentrated milk by reconstituting milk powder in a suitable amount of water, namely in such an amount that the protein concentration is higher than in fresh milk. For instance, a typical milk powder may be reconstituted in water in a weight to weight ratio of at least about 15:85, in particular of at least about 20:80. For practical reasons, it is preferred that the ratio is 30:70 or less.

It has been found that with a method according to the invention a cheese is obtained that has a perception that is generally associated with a cheese having a higher fat content. In particular, the cheese according to the invention has a lower strain and stress at fracture, indicating a lower hardness, than a similar cheese having the same fat content but manufactured in a conventional way. This is in particular illustrated by Example 1. Other advantages are discussed below.

Accordingly, the present invention also relates to a cheese, in particular a low-fat cheese, obtainable by a method according to the invention, having (i) low fat domains and (ii) a casein matrix, wherein the fat content of the low-fat domains is less than 10 wt.% based upon dry matter low fat domains, and wherein the fat content in the casein matrix is at least 30 wt.% based upon dry matter of the casein matrix.

In an embodiment the cheese according to the invention is a hard or semi-hard cheese, preferably a Dutch type cheese, in particular a Gouda type cheese or an Edam-type cheese.

In particular a cheese is considered a hard cheese or semi-hard cheese if the moisture content is less than 63 wt. % based upon the cheese without the fat. A Dutch type cheese is in particular defined here as a cheese made of fresh cows' milk, the milk being at most partly skimmed. The cheese usually has a semi-hard to hard consistency and a smooth texture, usually with small holes; the flavour intensity varies widely. Preferably the Dutch cheese is as defined by Walstra *et al.* in chapter 2 of "Cheese: Chemistry, Physics and Microbiology, Volume 2, Major cheese Groups, ed. P.F. Fox, Chapman & Hall, ISBN 0 412 53510 6 (V.2)".

The invention further relates to a cheese comprising (I) a casein matrix, containing fat globules, which may have coalesced, and (II) low-fat domains, comprising a milk protein - said low-fat domains having a relatively low fat content compared to the matrix - embedded in the casein matrix.

Without being bound by theory, it is contemplated that a cheese according to the invention has a distinct structure, wherein the fat is distributed through the cheese in a specific manner, thereby improving the texture and/or other properties such as identified above, also at a relatively low fat content of the cheese.

Therefore, the present invention also relates to a cheese - in particular a low-fat cheese - comprising (i) a casein matrix containing a relatively high content of fat, wherein fat is present in the form of a network of interconnected fat globules, and (ii) low-fat domains, having a relatively low fat content compared to the matrix, embedded in the casein matrix.

In addition, it has been found that in accordance with the invention a cheese is provided wherein the specific distribution of fat through the cheese, thereby improving texture and/or other properties such as identified above is defined by the average lowest distance between fat globules in the casein matrix. Accordingly, the invention relates to a cheese - in particular a low-fat cheese - comprising (i) a casein matrix, containing fat which fat is present in the form of fat globules and (ii) low-fat domains, comprising a milk protein - said low-fat domains having a relatively low fat content compared to the matrix - embedded in the casein matrix.

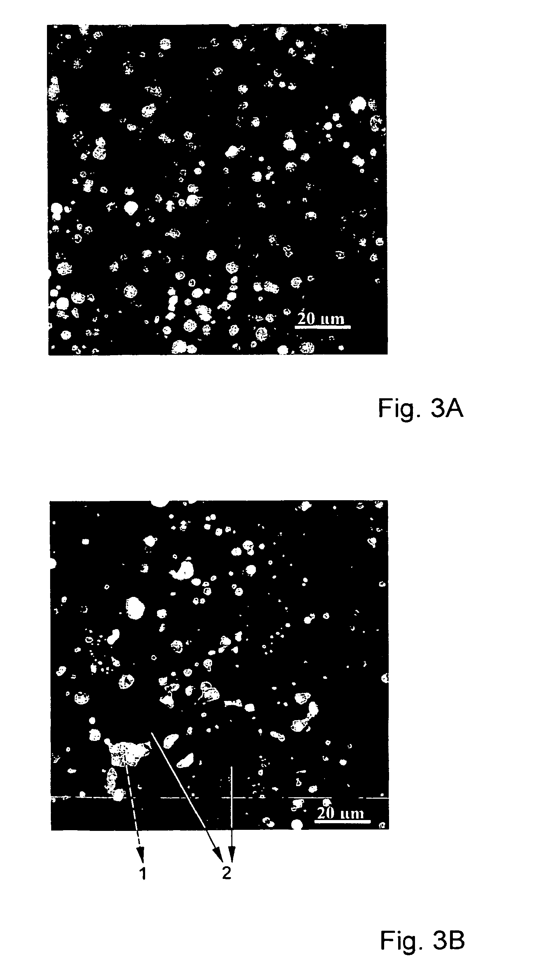

In particular, in a cheese according to the invention coalesced fat globules are present, which optionally form an interconnected network. Figure 3B shows a CSLM picture of a 20+ cheese of the invention. Clearly, fat domains (light areas) are formed of coalesced fat globules. Figure 3A shows a reference cheese. Herein the fat globules are more homogenously distributed and the fat globules are essentially uncoalesced.

The inhomogeneous structure of a cheese (prepared or obtainable) according to the invention may be visualised by an image analysis method. The presence of an inhomogeneous spatial distribution, such as a chain-like arrangement of fat globules in a continuous casein matrix, can be revealed using such a non-invasive imaging technique allowing visualization of the three-dimensional structure of the material with sufficient spatial resolution.

The inhomogeneity of a product according to the invention may be demonstrated by the disector method, a stereology based Image Analysis approach (John C Russ, Robert T. Dehoff, Practical Stereology, second edition, ISBN 0-306-46476-4, Kluwer Academic/Plenum Publishers), applied to CSLM images of the cheeses. The disector method allows the determination of the degree of connectivity in the fat phase, i.e. it provides a relative number (of fat globules) indicating this connective length.

For conventional (standard) Gouda cheeses, the inventors have determined the mean number fat globules in a string (MNS). It was found to be increased with increasing fat content (TL) (in wt. %), chemically determined with the Weibull method as described below and ageing/ripening of the cheese.

Based on these findings, the relation between fat content in such conventional cheeses may be formulated as:

$$MNS \approx 0.40 * TL + 1$$

In a product according to the invention the mean number of globules per string is usually higher than in a cheese with the same composition and produced with a conventional process to prepare a natural cheese.

In particular for a Gouda-type cheese according to the invention, the relation may be

$$MNS > 0.45 * TL + 1$$

Preferably the relation is:

$$MNS > 0.50 * TL + 1.$$

More preferably the relation is:

$$MNS > 0.55 * TL + 1.$$

The upper limit is not particularly critical. In principle MNS may be 100 or more. In particular MNS may be up to about 50, more in particular up to about 25. It will be understood that in general MNS increases with an increasing total fat content.

A method that is particularly suitable to characterise a product according to the invention is the Intercept Length method (John C Russ, Robert T. Dehoff, Practical Stereology, second edition, ISBN 0-306-46476-4, Kluwer Academic/Plenum Publishers). The principle of this method is as follows: a screen of parallel lines is transposed on a microscopic picture of the product. Along the lines the distance between subsequent fat globules (the intercept lengths) is determined.

In a conventional 48+ cheese there are relatively many short intercept lengths (0-10 $\mu$m), which is in agreement with the high fat content and consequent short distances between fat globules. In known cheeses with lower fat contents the distribution shifts to larger intercept lengths (for a typical known 20+ cheese most intercepts are 10-30 $\mu$m, with also a considerable amount of intercepts lengths up to 50 $\mu$m). Because of the lower fat content in such cheese the fat globules are on average further away from each other.

Compared to a (relatively homogenous) known cheese of essentially the same composition (in particular having the same fat, protein and water content; and preferably having the same age), a cheese according to the invention may be characterised by a intercept length distribution having an increased number of small intercept lengths, preferably an increased number of intercept lengths with a value of 0 to about 10 $\mu$m. It is contemplated that the increase in such intercept lengths is the result from the presence of protein domains (essentially free of fat globules) in a cheese according to the invention forcing the fat globules in a relatively small volume. In this volume, the fat globules are relatively close to each other, resulting in an increased number of small intercept lengths, compared to a naturally prepared cheese having the same fat, protein and water content, and preferably the same age.

A cheese of the invention may further be characterised in that the number of intercepts lengths of an intermediate length (typically a length between about 10 and about 40 $\mu$m, more specifically between about 10

and about 30 μm) is decreased compared to a naturally prepared cheese having the same fat, protein and water content, and preferably the same age.

An intercept length distribution of a cheese according to the invention may further show an increased abundance of intercept lengths of a relatively large size compared to a naturally prepared cheese having the same fat, protein and water content, and preferably the same age. In this context "a relatively large size" in particular refers to a size of at least about 30 μm, more in particular of at least about 40 μm. It is contemplated that this may be the result of the presence of relatively large protein domains, which are usually essentially free of fat globules. The dimensions of these protein domains determine the lower limit at which intercept length the abundance of intercept lengths is increased.

In a preferred cheese (prepared or obtainable) according to the invention the intercept length profile (intercept length plotted versus the intercept length * number of intercepts) shows at least two maxima and at least one minimum in between said maxima, at least one of the maxima being at a relatively small intercept length and at least one of the maxima being at a relatively large intercept length. The profile is preferably made by binning the data in bins of each at least 1 μm wide, preferably up to 5 μm, (e.g. a bin of 2 μm: from 0-2 μm, from 2-4 μ, etc). For 20+ to 48+ type cheeses a bin of at least 2 μm is particularly suitable; for fatter cheeses, such as of the 60+ type a bin of less than 2 μm, in particular of about 1 μm is particularly suitable The profile may be smoothened, and thereby correcting for spikes in the profile, allowing an easier interpretation of the profile.

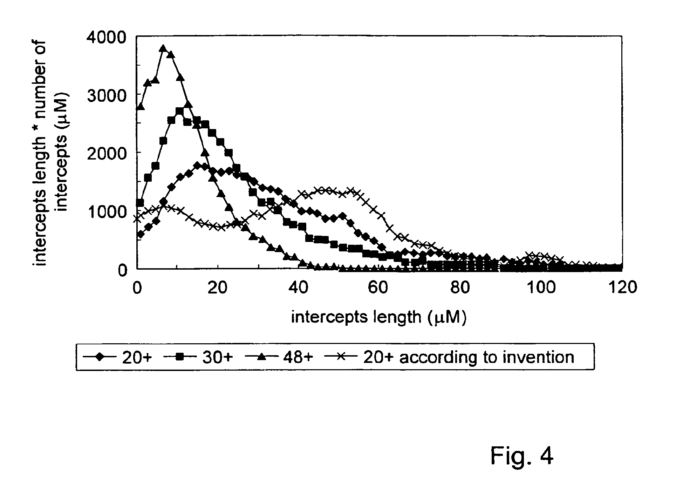

Figure 4 is a schematic illustration of how an intercept length profile of a cheese of the invention may look like. Profiles of some natural cheeses are also included. The values shown at the axis are not intended to be limiting.

Preferably the intercept length profile of such a cheese has a maximum at a relatively small intercept at an intercept length in the range of 0-10 μm.

Preferably the intercept length profile of such a cheese has a maximum at the relatively large intercept length at an intercept length of 30 μm or more, in particular 40 μm or more.

It is preferred that a minimum at intermediate length is present at an intercept length in the range of 10-40 μm, in particular in the range of 10-30 μm. In particular in case a maximum is present at a length below 10 μm said minimum may be present at a length below 10 μm, with the proviso that it is present at a length above the length at which said maximum is present. Likewise in case a maximum is present at a length above 40 μm, said minimum may be present at a length above 40 μm, with the proviso that it is present at a length below the length at which said maximum is present.

In a preferred cheese according to the invention the number of intercepts with a length in the range of 0 to about 10 μm is larger than the number of intercepts with a length in the range of about 15 to about 25 μm and the number of intercepts with a length in the range of about 40 to about 60 μm is larger than the number of intercepts with a length in the range of about 10 to about 30 μm.

In a preferred cheese of the invention, the number of intercepts with a length in the range of about 40 to about 60 μm is larger than the number of intercepts with a length in the range of about 10 to about 30 μm.

A cheese according to the invention usually has a relatively high fraction of extractable fat as a total percentage of the fat, in particular compared to a conventionally prepared cheese (based on the same ingredients in the same amounts). The fraction of extractable fat can be determined by the Soxhlet extraction according Weibull (Methods IDF 126A (1988) Milk products and milk-based foods (special cases), Determination of fat content Weibull-Bentrop gravimetrix method.) in combination with a modified version of the Weibull method. In this method cheeses are grated. In the regular Weibull method the protein matrix is digested, allowing total fat extraction. In the modified version the protein degradation is omitted. The fraction extractable fat is the amount of fat extracted using the modified Weibull extraction divided by the amount of fat extracted using the regular Weibull extraction.

The modified version of the Weibull extraction allows the extraction of fat in connection with the outersurface of the grated cheese and in the connective fat phase only. The larger the connectivity, the more fat will be extracted. The fraction of extractable fat according to the modified method is a measure for the degree of fat exposure for sensory perception. The connective (fat/matrix) interfaces are one of the underlying structural features of the invention.

For a regular Gouda-like cheese product the relationship between the total fat content of the product (TL) and the fraction of fats extractable by the Weibull method (EL) without protein degradation is:

$$EL\ (\%)\ \approx 4 * \%\ TL\ (\%) - 28\%$$

For a cheese according to the invention, more in particular for a Gouda-like cheese product according to the invention, more in particular for a cheese product having a fat content of up to 32 %, preferably up to 30 %, the relationship between the total fat content of the product (TL) and the amount of fats extractable by the Weibull method (EL) without protein degradation is preferably such that the amount of extractable fat as a percentage of the total fat content of the product is higher than for a comparable conventionally prepared natural cheese, i.e. a product having the same composition (in particular having the same total fat content and the same protein content) and preferably the same age.

Preferably the extractable fat percentage is at least 1 percentile point higher:

$$EL\ (\%)\ \geq 4 * \%\ TL\ (\%)\ - 27\%$$

wherein the total fat percentage is typically at most 31.75 %, preferably 30 % or less.

More preferably the extractable fat percentage is at least 5 percentile point higher:

$$EL\ (\%) \geq 4 * TL\ (\%) - 23\%$$

wherein the total fat percentage is typically at most 31.25 %, preferably 30 % or less.

The invention is particularly suitable for making a cheese with a fat content of 50 wt. % (d.m.) or less. In an embodiment, the cheese is a low-fat cheese, i.e. having a lower fat content than a traditional cheese of the same category. In particular, a low-fat cheese according to the invention has a fat content of up to about 40 % (d.m.), more in particular of less than 35 wt. % (d.m.). Preferably, the fat content is 30 wt. % (d.m.) or less, more preferably 25 wt. % (d.m.) or less, even more preferably up to 20 wt. % d.m. For practical reasons, the minimum amount of fat is preferably at least 5 wt. % (d.m.). In an embodiment, the amount of fat is at least 10 wt. % (d.m.).

A low-fat cheese according to the invention generally has a perception that is associated by consumers with a cheese with a higher fat content. In particular, an organoleptic perception (such as creaminess) and/or physical properties (such as consistency) may appear that of a fatter cheese. For example, in accordance with the present invention it is possible to provide a 30+ cheese with a perception that is similar or close to a 48+ cheese or a 48+ cheese with a perception similar or close to a 60+ cheese.

The cheese preferably essentially consists of milk derived components. Naturally remnants or additives typical to the specific production process of the cheese may still be present in such an embodiments (such as CaCl$_2$, rennet, salt/brine). In particular, (remnants of) micro-organisms (cultures) used for the preparation of the cheese and/or the low fat domains may be present.

The cheese according to the invention has a highly satisfactory texture.

Without wishing to be bound by any theory, it is contemplated that due to an inhomogeneous distribution of the fat globules forming a more or less continuous network, rather than a more homogenous distribution of discrete fat agglomerates throughout the cheese, as is common in known low-fat cheeses, a cheese according to the invention a favourable fatty impression, a good lubricating behaviour and/or a good release of fat-soluble flavours.

It is contemplated that this is at least for a part the result of the nature of the fracture planes of a cheese according to the invention.

A low-fat cheese according to the invention has fracture planes similar to those of a traditional fatter cheese, in particular a full fat cheese, also at a relatively low fat content. Thus, fracture of the cheese is facilitated.

The fracture plane is the plane at which the cheese breaks when deformed, as may be achieved by chewing. The cheese generally breaks a the weakest parts. The casein matrix with a high fat content is weaker than a comparable matrix without fat or a low fat content, due to the reduced continuity of the casein phase in the matrix by the presence of the fat globule network. The cheese will thus generally break in a fat rich region. As a result, in the fracture plane of a cheese according to the invention a relatively high content of fat globules are detectable, compared to a homogenous cheese with the same fat content.

In case of a full-fat cheese according to the invention, i.e. in particular a cheese having a fat content of 35 wt.% (d.m.) or more, more in particular of about 50 % (d.m.) or more, the fracture properties and creamy mouth feel may be better than in a comparable high-fat cheese, having the same fat content, known in the art.

The fat-rich casein matrix may be of the same or similar composition and structure as in the traditional full-fat cheese, for which the cheese of the invention is to be an alternative, in particular a low-fat alternative. The network of fat globules is generally built up from fat droplets (essentially consisting of milk fat), which may be about 2-8 $\mu$m in diameter, in a plurality of chain-like or strings-of-beads-like arrangements, forming the (continuous) network. The globules at least initially generally still have their fat globular membrane, preventing direct interactions between the casein and the contents (oil) of the cheese. As the cheese ripens globules of the network may coalesce, whilst maintaining a network.

The fat-rich casein matrix usually forms about 10 % to about 90 % based upon the total weight of the cheese, preferably 50-80 wt.%. In order to obtain a favourable (fat) network in the fat-rich casein matrix, the fat content in the casein matrix is preferably at least about 30 wt. % in dry matter. In particular, a content of about 30 wt. % d.m. to about 60 % d.m. is generally considered to be effective.

The low-fat domains (ii) are generally discrete sections inside the cheese, formed by low-fat particles that are surrounded by the high-fat network. The cheese comprises a plurality of low-fat domains that are essentially spatially separated from each other. The low-fat particles serve to reduce the overall fat content of the cheese. Therefore, the particles are preferably essentially free of fat. Some fat may be present, but the fat content of the particles should be less than the intended fat-content for the cheese. Preferably a low-fat domain or particle contains less than 10 wt. % fat, based upon the total dry matter weight of the domains, preferably 0-1 wt. % (d.m.) fat, more preferably less than 0.1wt. % (d.m.) fat.

In principle, the low-fat domains may comprise any foodgrade non-fatty substance, in particular a compound selected from the group consisting of proteins and polysaccharides, such as starches. Preferably, the low-fat domains comprise at least one milk protein, more preferably casein and/or whey-protein. Very suitable are low-fat domains that essentially consist of one or more milk proteins, in particular of casein and/or whey protein (such as aggregated whey protein).

In particular, good results have been achieved with particles comprising casein.

Preferably, the particles comprising casein are neutral or slightly acidic, i.e. when dissolved/dispersed in water (25 °C) at a 10 wt. % concentration, the measured pH is preferably about 5.5 to about 7, more preferably about 5.5 to about 6.5. Under slightly acidic or neutral conditions a desirable taste has been found to develop.

The particles may be neutralised after having been prepared under acidic conditions or the particles may be formed by curdling.

The particles may comprise remnants of the preparation process, such as bacteria and metabolic products.

The part of the cheese forming the low-fat domains (ii) - preferably domains formed by casein particles - is generally about 10 wt. % to about 90 wt. % based upon the total weight, preferably about 15 wt. % to about 60 wt. %, more preferably about 20-50 wt. %.

For further improvement of fracture properties of the cheese and/or for a good embedding into the high-fat network it is preferred that the low-fat domains have a relatively low particle size. Preferably, the number average particle size, as determined by microscopy, is about 200 μm or less, more preferably in the range of about 10 to about 100 μm. A relatively low particle size is further preferred in view of achieving a very good mouth feel and taste sensation, with hardly any grainy impressions, if at all.

In accordance with the invention it has been found possible to provide a cheese, in particular a low-fat Gouda type cheese, e.g. having a fat content of 20 to 30 wt. % in the dry matter with a texture of a full-fat cheese. As indicated above, the invention also relates to a method for preparing a cheese with reduced fat content, in particular a low-fat cheese - comprising (i) a casein matrix containing a relatively high content of fat, wherein fat is present in the form of a network of interconnected fat globules, and (ii) low-fat domains, having a relatively low fat content compared to the matrix, embedded in the casein matrix.

In accordance with the invention, the cheese is generally made by adding particles of a low-fat material to the cheese milk in a suitable ratio to provide the cheese with the intended fat content. Usually the weight to weight ratio is at least 1:12, more in particular at least 1:8. The exact ratio is usually chosen, depending upon the desired fat content of the cheese. For instance, for a 20+ cheese a suitable ratio (based upon fat milk with a fat content of 2.6 wt.%) is about 3:2. The exact ratio may further be altered in case a concentrated milk is used for the production of the protein aggregates. A preferred ratio in case a concentrated milk is used for the production of the protein aggregates, is in the range of 1:(4*concentration factor) to 3:(2*concentration factor), wherein the concentration factor is based on protein concentration in the concentrate divided by the protein concentratation in the non-concentrated milk.

In particular preferred is a weight to weight ratio of the low-fat particles to the cheese milk (usually full fat milk) in the range of 1:4 to 3:2.

In order to prepare a cheese according to the invention, it has been found advantageous to first prepare low-fat particles by fermenting (pasteurised) skimmed milk. For fermentation use may be made of fermenting cultures, known in the preparation of cheese. An example of a suitable culture is a yoghurt.

Fermenting can very suitably be carried out by inoculating the skimmed milk with a starter culture suitable for curdling, in particular a starter culture selected from the group consisting of mesophilic or thermophilic lactic acid bacteria. A suitable acidifying starter culture is Bos (available from CSK,Leeuwarden, the Netherlands). A preferred example of a culture is APS (available from CSK,Leeuwarden, the Netherlands) Such a starter is advantageous because it may thereafter also be used for the actual preparation of the curd during the production of the (low-fat) cheese. The additional presence of a starter culture suitable for curdling in the low-fat particles has been found to contribute to a faster and/or more intense development of the taste and/or an accelerated ripening during the production of the cheese.

Fermentation conditions for forming the low-fat particles, such as temperature and pH, can suitably be chosen depending upon what is known to be suitable for the specific culture that is used.

During fermentation, aggregates may be formed, which may be used for providing the low-fat domains. Preferably, fermentation is carried out until a gel-like structure is formed.

After fermentation, the fermented product may be neutralised with a hydroxide, such as NaOH, usually while stirring. In particular case a gel-like structure have formed after fermentation, stirring is also effective in breaking the gel, thereby forming the aggregates.

The aggregates are then mixed in a suitable ratio with the cheese milk, after which the cheese is formed. Although the aggregates may be separated from the remainder of the fermentation liquid, the remainder of the fermentation liquid and the aggregates may be mixed with the cheese milk. In particular when the aggregates have been made using a culture suitable for curdling, this has been found advantageous.

The forming of the cheese (culturing, renneting, cutting, release of whey, washing, release of whey, pressing of curd, brining, ripening) may be carried out in a manner known in the art.

Next, the invention is illustrated by the following examples.

Example 1

A 20+ Gouda-type cheese was produced, as schematically indicated in Figure 1.

Pasteurized skimmed milk was inoculated with the thermophilic mixed culture APS (available from CSK Food Enrichment, Leeuwarden, the Netherlands). After fermenting for 18 h at 42°C the pH was 3.5. The ferment was cooled to 4°C and neutralized with concentrated NaOH while shearing severely. The aggregates were mixed with membrane filtration concentrated fat-containing milk in the ratio 1:4 to 2:3, resulting in a low-fat particle addition of respectively 20 % and 40 %. The fat contents of the fat containing milk were respectively 1.6 % and 2.2 %.

The resulting cheese milk comprised 1.3% fat and 4.5% protein. Subsequently, cheeses were produced in usual way for preparing Gouda type cheese (i.e. culturing, renneting, cutting, release of whey, washing, release of whey, pressing of curd, brining, ripening). The cheese was compared with a reference 20+ cheese (i.e. made from milk with a composition that was equal to that of the mixture of aggregates and fat containing milk having 1.3% fat, 4.5% protein) In the reference cheese the fat was homogeneously distributed.

The cheeses were analysed after 7 weeks of ripening:

Confocal Scanning Laser Microscopy images of the cheeses with aggregates showed domains of about 20-100 $\mu$m that were void of fat globules surrounded by domains of higher fat content, whereas in the reference cheese the fat globules were homogeneously distributed.

The cheeses were tested with large deformation rheology using a Texture Analyzer (Stable Micro Systems, model TA Txplus, Godalming UK). The strain and stress at fracture of the cheeses containing aggregates were lower than for the reference cheese, indicating that the cheese containing aggregates was shorter and less hard.

The texture of the cheeses was evaluated by an expert panel and a trained quantitative descriptive analysis panel. Both panels evaluated the cheeses containing aggregates as more malleable, creamier and less tough than the reference 20+ cheese, i.e. having a consistency associated with a considerably fatter cheese. The flavour of the cheeses containing aggregates was evaluated as more ripened.

Example 2

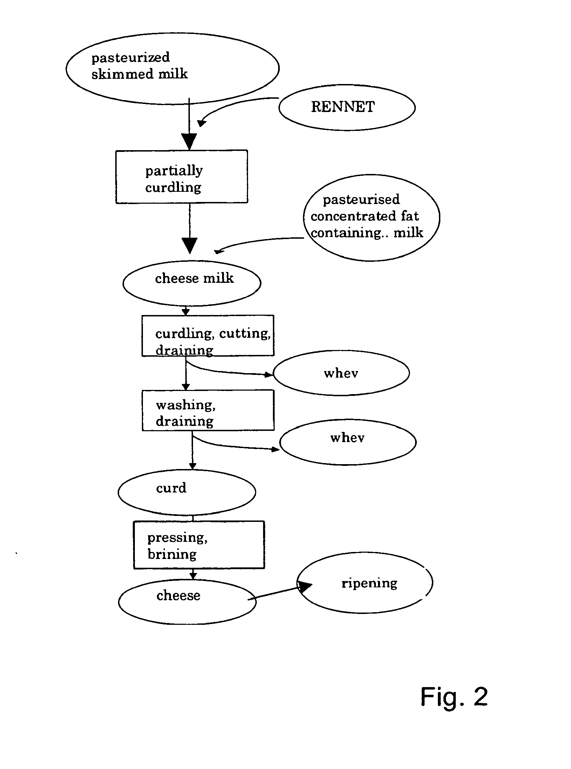

In this example, a 20+ gouda-type cheese was produced (see Figure 2). To 375 kg of pasteurized skimmed milk of 30°C containing 0.07% fat and 4.1% protein, 4 kg of active mesophilic starter (type Bos, available from the CSK Food Enrichment, Leeuwarden, NL) and 14 kg active mixed culture (APS, available from the CSK Food Enrichment, Leeuwarden, NL), 225 g of a 35% CaC12 solution, 20 ml of beta-carotene cheese colouring (CSK) and 75 grams of a rennet preparation (CSK) were added. The milk was partially renneted, the renneting process being followed by diffusing wave spectroscopy, i.e. to such an extent that aggregates were formed, but gelation had not taken place.

The partially renneted skimmed milk was then mixed with 125 kg milk with 4.9% fat and 5.7% protein. To the mixture 225 g of a 35% CaC12 solution and 25 grams of a rennet preparation were added. Subsequently, cheese was produced in the usual way, i.e. after gelation the gel was cut, whey was released, the curd was washed, whey was released, of the curd was pressed, brined and ripened.

Example 3

A 20+ cheese made as described in Example 1.

A 20+ reference cheese was made by mixing unfermented skimmed milk with the fat containing milk to form a cheese milk and the cheese was made under conditions as described in Example 1 (except for the fermenting step of the skimmed milk).

After 14 weeks or ripening, CSLM pictures were made from both cheeses, using the following protocol:

A thin slice cheese (~ 1 x 5 x 5 mm) was incubated for 30 min with a staining solution of 0.01% Nile Red and 0.1% fluorescein isothiocyanate (FITC) in 45% glycerol/50% poly-ethylene glycol/5% water. Fat and protein were visualized with an inverted CSLM (Leica TCS SP2, DM IRE2). The cheese samples were excited at 488 nm, and emission of Nile Red and FITC was scanned at 595-648 nm and 500-536 nm, respectively. In the CSLM images (figures 3A-3B) only the fat phase is shown (light areas).

Figure 3A shows the image of the reference cheese. It can be seen that the fat globules are essentially uncoalesced (having an essentially circular cross section). Further, the fat globules are distributed throughout the cheese sample in a highly homogenous pattern.

Figures 3B show an image of a 20+ cheese according to the invention (of the same bulk composition as the reference cheese). It is clearly shown that here, fat globules have coalesced (light areas, e.g. the area indicated by arrow 1; light areas are larger, non-circular light areas are abundant). It can also be seen that relatively large black areas (e.g. arrows 2) are defined by surrounding lighter areas. These black areas are low-fat domains.

The cheese according to the invention and the reference cheese were further evaluated with image analysis, such as by the disector and intercept length methods, as described in J.C. Russ; R.T. Dehoff (2000) Practical stereology, 2nd ed., Kluwer Academic, New York.

**Claims**

**1.** Method for preparing a cheese, comprising

- subjecting a milk protein containing liquid (such as milk), having a relatively low fat content, to at least partial curdling, thereby forming low-fat particles;
- mixing the low-fat particles with a cheese milk having a relatively high fat content; and
- forming the cheese from the mixture.

**2.** Method for preparing a cheese, comprising

- fermenting a liquid comprising a milk protein, in particular skimmed milk;
- forming low-fat particles comprising fermented milk protein from the fermented liquid;
- mixing the low-fat particles, with cheese milk, in particular full-fat milk; and
- forming the cheese from the mixture comprising the low-fat particles and the milk.

**3.** Method according to claim 1 or 2, wherein at least part of the cheese milk is concentrated by a membrane filtration technique or wherein at least part of the cheese milk is concentrated cheese milk obtained by reconstituting milk powder.

**4.** Method according to any one of the claims 1-3, wherein the low-fat particles and the cheese milk are mixed in a weight to weight ratio in the range of 1:8 to 3:2, preferably 1:4-3:2.

**5.** Method according to any one of the claims 1-4, wherein the liquid comprising milk protein is inoculated with a culture selected from the group of mesophilic or thermophilic lactic acid bacteria and yoghurt cultures, prior to fermentation.

**6.** Cheese obtainable by a method according to any one of claims 1-5, having (i) low fat domains and (ii) a casein matrix, wherein the fat content of the low-fat domains is less than 10 wt. % based upon the dry matter low fat domains, and wherein the fat content in the casein matrix is at least 30 wt. %, based upon the dry matter of the casein matrix.

**7.** Cheese comprising (i) a casein matrix, containing fat globules, which may have coalesced, and (ii) low-fat domains, comprising a milk protein - said low-fat domains having a relatively low fat content compared to the matrix - embedded in the casein matrix.

**8.** Cheese according to claim 7, wherein coalesced globules are present that form an interconnected network.

**9.** Cheese according to claim 6, 7 or 8, wherein the cheese is a low-fat cheese.

**10.** Cheese according to claims, 7, 8 or claim 9 dependent on claim7 or 8, wherein the fat content of the low-fat domains is less than 10 wt. % based upon the dry matter low fat domains, and wherein the fat content in the casein matrix is at least 30 wt. %, based upon the dry matter of the casein matrix.

**11.** Cheese according to any one of the claims 6-10, wherein the content of (ii) low-fat domains is in the range of 5 to 80 wt.% based on the total weight of the cheese.

**12.** Cheese according to any one of the claims 6-11, wherein the (ii) low-fat domains have a number average size, as determined by microscopy of less than 200 $\mu$m, preferably in the range of 10 to 100 $\mu$m.

**13.** Cheese according to any one of the claims 6-12, wherein the fat content of the cheese is 5-50 wt. % dry matter, preferably 5-30 wt. % dry matter, more preferably 5-20 wt. % dry matter.

**14.** Cheese according to any one of the claims 6-13, wherein the milk protein in the (ii) low fat domains is selected from the group consisting casein and whey proteins.

**15.** Cheese according to any one of the claims 6-14, essentially consisting of milk components, preferably essentially consisting from milk proteins selected from the group consisting of casein and whey protein, more preferably essentially consisting of casein.

**16.** Cheese according to any one of the claims 6-15, wherein the cheese is a hard or semi-hard cheese, preferably a Dutch type cheese.

**17.** Cheese according to any one of the claims 6-16, wherein the percentage of extractable fat (EL) in the cheese, as determined by the Weibull method, as a function of the percentage of total fat (TL) in the cheese, as determined by the same Weibull method, with the proviso that the protein degradation is omitted, is represented by the following formula:

$$EL > 4 * TL - 28,$$

with the proviso that TL is at most 32 % preferably by the formula

$$EL \geq 4*TL - 27,$$

with the proviso that TL is at most 31.75 % more preferably by the formula

$$EL \geq 4*TL - 23.$$

with the proviso that TL is at most 30.75 %

18. Cheese according to any one of the claims 6-17, wherein the relationship between the mean number of fat globules per string (MNS) and the total fat content (TL in wt. %) is represented by the following formula:

$$MNS > 0.45*TL + 1$$

preferably by the formula

$$MNS > 0.5*TL + 1$$

more preferably by the formula

$$MNS > 0.55*TL + 1$$

19. Cheese according to any one of the claims 6-18, wherein the intercept length profile (intercept length plotted versus the intercept length times the number of intercepts) shows at least two maxima and at least one minimum in between said maxima, at least one of the maxima being at a relatively small intercept length and at least one of the maxima being at a relatively large intercept length.

20. Cheese according to claim 19, wherein the maximum at a relatively small intercept length is present at an intercept length in the range of 0-10 $\mu$m.

21. Cheese according to claim 19 or 20, wherein the maximum at the relatively large intercept length is present at an intercept length of 30 $\mu$m or more, in particular 40 $\mu$m or more.

**Patentansprüche**

1. Verfahren zur Herstellung von Käse, umfassend

- Unterziehen einer milchproteinhaltigen Flüssigkeit (wie zum Beispiel Milch) mit einem relativ geringen Fettgehalt, einem zumindest teilweisen Gerinnen, wodurch fettarme Partikel gebildet werden;
- Mischen der fettarmen Partikel mit einer Käsemilch von relativ hohem Fettgehalt; und
- Bildung von Käse aus dieser Mischung.

2. Verfahren zur Herstellung von Käse, umfassend

- Fermentierung einer Flüssigkeit umfassend ein Milchprotein, insbesondere Magermilch;
- Bilden von fettarmen Partikel umfassend fermentiertes Milchprotein aus der fermentierten Flüssigkeit;
- Mischen der fettarmen Partikel mit Käsemilch, insbesondere Vollmilch; und
- Bilden des Käses aus der Mischung umfassend die fettarmen Partikel und die Milch.

3. Verfahren nach Anspruch 1 oder 2, wobei mindestens ein Teil der Käsemilch durch eine Membranfiltrationstechnik konzentriert ist, oder wobei mindestens ein Teil der Käsemilch konzentrierte Käsemilch ist, die durch Rekonstitution von Milchpulver erhalten wurde.

4. Verfahren nach einem der Ansprüche 1 bis 3, wobei die fettarmen Partikel und die Käsemilch in einem Gewichtsverhältnis in einem Bereich von 1:8 bis 3:2, vorzugsweise 1:4 bis 3:2, gemischt werden.

5. Verfahren nach einem der Ansprüche 1 bis 4, wobei die Milchprotein umfassende Flüssigkeit vor der Fermentation mit einer Kultur beimpft wird ausgewählt aus der Gruppe bestehend aus mesophilen oder thermophilen Milchsäurebakterien und Yoghurtkulturen.

6. Käse erhältlich aus durch ein Verfahren nach einem der Ansprüche 1 bis 5, mit (i) fettarmen Bereichen und (ii) einer Caseinmatrix, wobei der Fettgehalt der fettarmen Bereiche weniger als 10 Gewichtsprozent bezogen auf die Trockenmasse der fettarmen Bereiche beträgt, und wobei der Fettgehalt in der Caseinmatrix mindestens 30 Gewichtsprozent bezogen auf die Trockenmasse der Caseinmatrix beträgt.

7. Käse umfassend (i) eine Caseinmatrix, enthaltend Fettkügelchen welche koalesziert sein können, und (ii) in die Caseinmatrix eingebettete fettarme Bereiche umfassend ein Milchprotein - wobei die fettarmen Bereiche einen relativ geringen Fettgehalt verglichen mit der Matrix aufweisen.

8. Käse nach Anspruch 7, wobei koaleszierten Kügelchen vorhanden sind, die ein miteinander verbundenes Netzwerk bilden.

9. Käse nach Anspruch 6, 7 oder 8, wobei der Käse ein fettarmer Käse ist.

10. Käse nach den Ansprüchen 7, 8 oder Anspruch 9 abhängig von Anspruch 7 oder 8, wobei der Fettgehalt der fettarmen Bereiche weniger als 10 Gewichtsprozent bezogen auf die Trockenmasse der fettarmen Bereiche beträgt, und wobei der Fettgehalt in der Caseinmatrix mindestens 30 Gewichtsprozent bezogen auf die Trokkenmasse der Caseinmatrix beträgt.

11. Käse nach einem der Ansprüche 6 bis 10, wobei der Gehalt an (ii) fettarmen Bereichen in einem Bereich von 5 bis 80 Gewichtsprozent bezogen auf das Gesamtgewicht des Käses beträgt.

12. Käse nach einem der Ansprüche 6 bis 11, wobei die (ii) fettarmen Bereiche eine Zahl einer durchschnittlichen Größe aufweisen, welche mikroskopisch bestimmt weniger als 200 $\mu$m beträgt, vorzugsweise im Bereich von 10 bis 100 $\mu$m.

13. Käse nach einem der Ansprüche 6 bis 12, wobei der Fettgehalt des Käses 5 bis 50 Gewichtsprozent der Trockenmasse, vorzugsweise 5 bis 30 Gewichtsprozent der Trockenmasse, mehr bevorzugt 5 bis 20 Gewichtsprozent der Trockenmasse beträgt.

14. Käse nach einem der Ansprüche 6 bis 13, wobei das Milchprotein in den (ii) fettarmen Bereichen ausgewählt ist aus der Gruppe bestehend aus Casein und Molkeproteinen.

15. Käse nach einem der Ansprüche 6 bis 14, im Wesentlichen bestehend aus Milchbestandteilen, vorzugsweise im Wesentlichen bestehend aus Milchproteinen ausgewählt aus der Gruppe bestehend aus Casein und Molkeprotein, mehr bevorzugt im Wesentlichen bestehend aus Casein.

16. Käse nach einem der Ansprüche 6 bis 15, wobei der Käse ein Hartkäse oder ein Halbhartkäse ist, vorzugsweise ein Käse holländischen Typs.

17. Käse nach einem der Ansprüche 6 bis 16, wobei der Prozentsatz an extrahierbarem Fett (EL) im Käse, bestimmt durch die Weibull Methode, als Funktion des Prozentsatzes an Gesamtfett (TL) im Käse, bestimmt durch die gleiche Weibull Methode, unter der Bedingung, dass die Proteindegradation ausgelassen wird, durch die folgende Formel dargestellt ist:

$$EL > 4 * TL - 28$$

unter der Bedingung, dass TL höchstens 32% beträgt vorzugsweise durch die Formel

$$EL \geq 4 * TL - 27$$

unter der Bedingung, dass TL höchstens 31.75% beträgt mehr bevorzugt durch die Formel

$$EL \geq 4 * TL - 23$$

unter der Bedingung, dass TL höchstens 30.75% beträgt

18. Käse nach einem der Ansprüche 6 bis 17, wobei die Beziehung zwischen der durchschnittlichen Zahl an Fettkügelchen pro Strang (MNS) und dem Gesamtfettgehalt (TL in Gewichtsprozent) durch die folgende Formel dargestellt ist:

$$MNS > 0.45*TL+1$$

vorzugsweise durch die Formel

$$MNS > 0.5*TL+1$$

mehr bevorzugt durch die Formel

$$MNS > 0.55*TL+1$$

19. Käse nach einem der Ansprüche 6 bis 18, wobei das Abschnittslängenprofil (Abschnittslänge aufgetragen gegen die Abschnittslängen mal die Anzahl von Abschnitten) mindestens zwei Maxima und mindestens ein Minimum zwischen den beiden Maxima zeigt, wobei mindestens eines der Maxima bei einer relativ kleinen Abschnittlänge liegt, und mindestens eines der Maxima bei einer relativ großen Abschnittslänge liegt.

20. Käse nach Anspruch 19, wobei das Maximum bei einer relativ kleinen Abschnittslänge bei einer Abschnittslänge im Bereich von 0 bis 10 μm gelegen ist.

21. Käse nach Anspruch 19 oder 20, wobei das Maximum bei einer relativ großen Abschnittslänge bei einer Anschnittslänge von 30 μm oder mehr, insbesondere 40 μm oder mehr gelegen ist.

**Revendications**

1. Procédé de préparation d'un fromage, consistant à

    - soumettre un liquide contenant des protéines de lait (tel que du lait), ayant une teneur en matières grasses relativement faible, à au moins un caillage partiel, en formant ainsi des particules à faible teneur en matières grasses ;
    - mélanger les particules à faible teneur en matières grasses avec un lait de fromagerie ayant une teneur en matières grasses relativement élevée ; et
    - former le fromage à partir du mélange.

2. Procédé de préparation d'un fromage, consistant à :

    - faire fermenter un liquide comprenant une protéine de lait, en particulier du lait écrémé ;
    - former des particules à faible teneur en matières grasses comprenant une protéine de lait fermenté du liquide fermenté ;
    - mélanger les particules à faible teneur en matières grasses avec du lait de fromagerie, en particulier du lait entier ; et
    - former le fromage à partir du mélange comprenant les particules à faible teneur en matières grasses et le lait.

3. Procédé selon la revendication 1 ou 2, dans lequel au moins une partie du lait de fromagerie est concentrée via une technique de filtration sur membrane ou dans lequel au moins une partie du lait de fromagerie est du lait de fromagerie concentré obtenu en reconstituant de la poudre de lait.

4. Procédé selon l'une quelconque des revendications 1 à 3, dans lequel les particules à faible teneur en matières grasses et le lait de fromagerie sont mélangés selon un rapport poids pour poids dans le domaine de 1:8 à 3:2, de préférence 1:4 à 3 :2.

5. Procédé selon l'une quelconque des revendications 1 à 4, dans lequel le liquide comprenant une protéine de lait est inoculé avec une culture choisie dans le groupe consistant en bactéries d'acide lactique mésophiles ou thermophiles et en cultures de yogourt, avant la fermentation.

6. Fromage pouvant être obtenu par un procédé selon l'une quelconque des revendications 1 à 5, ayant (i) des domaines à faible teneur en matières grasses et (ii) une matrice de caséine, dans lequel la teneur en matières grasses des domaines à faible teneur en matières grasses est inférieure à 10 % en poids sur la base des domaines à faible teneur en matières grasses de matière sèche, et dans lequel la teneur en matières grasses dans la matrice de caséine est d'au moins 30 % en poids sur la base de la matière sèche de la matrice de caséine.

7. Fromage comprenant (i) une matrice de caséine, contenant des globules gras, qui peuvent avoir coalescés, et (ii) des domaines à faible teneur en matières grasses, comprenant une protéine de lait - lesdits domaines à faible teneur en matières grasses ayant une teneur en matières grasses relativement faible comparé à la matrice - noyée dans la matrice de caséine.

8. Fromage selon la revendication 7, dans lequel les globules coalescés sont présents et forment un réseau interconnecté.

9. Fromage selon la revendication 6, 7 ou 8, lequel fromage est un fromage à faible teneur en matières grasses.

10. Fromage selon les revendications 7, 8 ou la revendication 9 dépendante de la revendication 7 ou 8, dans lequel la teneur en matières grasses des domaines à faible teneur en matières grasses est inférieure à 10 % en poids sur la base des domaines à faible teneur en matières grasses de matière sèche, et dans lequel la teneur en matières grasses dans la matrice de caséine est d'au moins 30 % en poids sur la base de la matière sèche de la matrice de caséine.

11. Fromage selon l'une quelconque des revendications 6 à 10, dans lequel la teneur en (ii) domaines à faible teneur en matières grasses est dans le domaine de 5 % à 80 % en poids sur la base du poids total du fromage.

12. Fromage selon l'une quelconque des revendications 6 à 11, dans lequel les (ii) domaines à faible teneur en matières grasses ont une taille moyenne en nombre, telle que déterminée par microscopie, inférieure à 200 μm, de préférence dans le domaine de 10 à 100 μm.

13. Fromage selon l'une quelconque des revendications 6 à 12, dans lequel la teneur en matières grasses du fromage est de 5 % à 50 % en poids de matière sèche, de préférence de 5 % à 30 % en poids de matière sèche, de manière davantage préférée de 5 % à 20 % en poids de matière sèche.

**14.** Fromage selon l'une quelconque des revendications 6 à 13, dans lequel la protéine de lait dans les (ii) domaines à faible teneur en matières grasses est choisie dans le groupe consistant en caséine et en protéines lactosériques.

**15.** Fromage selon l'une quelconque des revendications 6 à 14, consistant essentiellement en composants du lait, de préférence consistant essentiellement en protéines de lait choisies dans le groupe consistant en caséine et protéines lactosériques, de manière davantage préférée consistant essentiellement en caséine.

**16.** Fromage selon l'une quelconque des revendications 6 à 15, lequel fromage est un fromage à pâte dure ou demi-dure, de préférence un fromage de type hollandais.

**17.** Fromage selon l'une quelconque des revendications 6 à 16, dans lequel le pourcentage de matières grasses extractibles (EL) dans le fromage, tel que déterminé par le procédé Weibull, en fonction du pourcentage de matières grasses totales (TL) dans le fromage, tel que déterminé par le même procédé Weibull, à la condition que la dégradation des protéines soit omise, est représenté par la formule suivante :

$$EL > 4 * TL - 28,$$

à la condition que TL soit au plus égal à 32 %, de préférence par la formule

$$EL \geq 4 * TL - 27,$$

à la condition que TL soit au plus égal à 31,75 %, de manière davantage préférée par la formule

$$EL \geq 4 * TL - 23,$$

à la condition que TL soit au plus égal à 30,75 %.

**18.** Fromage selon l'une quelconque des revendications 6 à 17, dans lequel la relation entre le nombre moyen de globules gras par chaîne (MNS) et la teneur totale en matières grasses (TL en % en poids) est représentée par la formule suivante :

$$MNS > 0,45 * TL + 1$$

de préférence par la formule

$$MNS > 0,5 * TL + 1$$

de manière davantage préférée par la formule

$$MNS > 0,55 * TL + 1.$$

**19.** Fromage selon l'une quelconque des revendications 6 à 18, dans lequel le profil de longueur d'interception (longueur d'interception tracée par rapport à la longueur d'interception multipliée par le nombre d'interceptions) représente au moins deux maxima et au moins un minimum entre lesdits maxima, au moins l'un des maxima étant à une longueur d'interception relativement faible et au moins l'un des maxima étant à une longueur d'interception relativement grande.

**20.** Fromage selon la revendication 19, dans lequel le maximum à une longueur d'interception relativement faible est présent à une longueur d'interception dans le domaine de 0 à 10 $\mu$m.

**21.** Fromage selon la revendication 19 ou 20, dans lequel le maximum à la longueur d'interception relativement grande est présent à une longueur d'interception de 30 $\mu$m ou plus, en particulier de 40 $\mu$m ou plus.

Fig. 1

Fig. 2

Fig. 3A

Fig. 3B

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 9500032 A